# FASCICULE DE BREVET EUROPEEN

(11) **EP 3 164 286 B1**
(45) Date de publication et mention de la délivrance du brevet: **15.08.2018**
(21) Numéro de dépôt: 15732851.9
(22) Date de dépôt: 10.06.2015
(51) Int. Cl.: B60K 13/04, B62D 25/16, F01N 3/20, B60K 15/05, B60K 15/04

(54) **AILE ARRIERE DE VEHICULE AUTOMOBILE LOGEANT UN RESERVOIR DE LIQUIDE DE REDUCTION CATALYTIQUE SELECTIVE**
HECKFLÜGEL FÜR KRAFTFAHRZEUG, GEHÄUSE EINES TANKS FÜR FLÜSSIGKEIT ZUR SELEKTIVEN KATALYTISCHEN REDUKTION
REAR WING FOR MOTOR VEHICLE, HOUSING A TANK FOR LIQUID FOR SELECTIVE CATALYTIC REDUCTION

(30) Priorité: 01.07.2014 FR 1456268
(43) Date de publication de la demande: 10.05.2017
(73) Titulaire: PSA Automobiles SA, 78300 Poissy (FR)
(72) Inventeur: CONVERS, Germain, F-25200 Bethoncourt (FR); BOUVROT, Frédéric, F-25150 Bourguignon (FR); ROBERT, Pascal, F-25550 Bavans (FR); LE BARS, Franck, F-33200 Bordeaux (FR); MORLOT, Lionel, F-70200 Frotey Les Lure (FR); LAMBOLEY, Franck, F-70400 Brevilliers (FR)
(74) Mandataire: Renous Chan, Véronique
(86) Numéro de dépôt international: PCT/FR2015/051533
(87) Numéro de publication internationale: WO 2016/001501

(56) Documents cités:
- EP-A1- 2 628 622
- DE-B1- 1 655 574
- FR-A1- 2 435 367
- US-A1- 2010 313 969

## Description

L'invention porte sur une aile arrière de véhicule automobile logeant un réservoir de liquide de réduction catalytique sélective.

On sait que les niveaux de polluants émis par les véhicules sont soumis à réglementation. Parmi ces polluants, les oxydes d'azote ou NOx sont plus particulièrement réglementés avec des normes d'émission de plus en plus contraignantes.

Afin de diminuer le niveau d'émission d'oxydes d'azote, ces derniers peuvent être traités en sortie du moteur via des systèmes de post-traitement. Ainsi, le système de post-traitement des gaz d'échappement du moteur peut comprendre une réduction catalytique sélective utilisant un agent réducteur, avantageusement de l'urée ou un autre dérivé de l'ammoniac, ceci en amont d'un catalyseur de réduction.

Un tel système de réduction catalytique sélective est aussi connu sous l'abréviation française RCS ainsi que sous l'abréviation anglaise SCR pour « selective catalytic réduction ». Un tel moyen de dépollution fonctionne par injection dans la ligne d'échappement d'un agent de dépollution dit agent liquide de réduction ou liquide RCS.

Un tel système RCS comprend un réservoir d'agent liquide de réduction. Ce réservoir est relié par une canalisation à un injecteur, la canalisation comprenant une pompe. Un accumulateur est raccordé à la canalisation d'agent liquide, en étant disposé en aval de la pompe. L'accumulateur reçoit et définit la dose d'agent liquide de réduction à envoyer dans la ligne d'échappement.

Actuellement, le réservoir d'agent liquide de réduction est rempli par un homme de l'art en concession lors de la maintenance du véhicule automobile. Cependant, les normes de dépollution en vigueur dans le monde et notamment en Europe deviennent de plus en plus exigeantes. Par exemple, la nouvelle norme Euro 6.2 qui entrera en vigueur vers les années 2016- 2017 imposera une consommation accrue de liquide de réduction. Ceci va obliger à effectuer des remplissages fréquents du réservoir d'agent liquide de réduction qui seront alors effectués par le propriétaire du véhicule automobile, ceci de une à plusieurs fois par an selon le nombre de kilomètre parcourus.

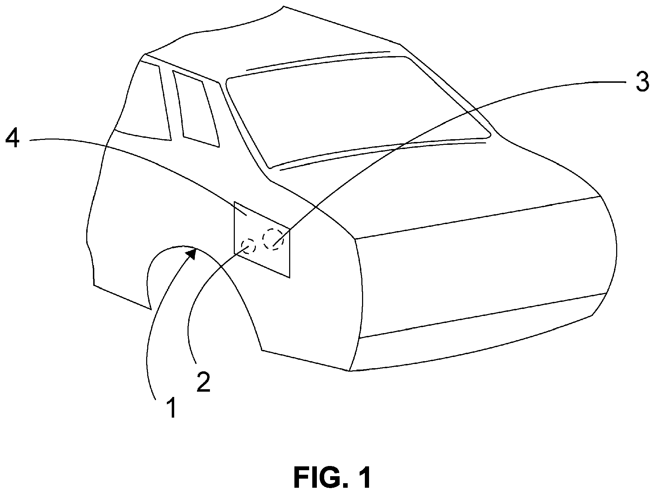

Pour permettre un remplissage facilité du réservoir d'agent liquide de réduction, ce réservoir, avantageusement positionné à proximité du réservoir à carburant, sera alimenté à travers un orifice de remplissage d'agent liquide de réduction. Cet orifice de remplissage pourrait être implanté juste à côté de l'orifice de remplissage du carburant, au dessus d'une roue arrière du véhicule automobile et donc dans une aile arrière du véhicule. Ceci est montré à la figure 1.

La figure 1 montre une aile arrière 1 gauche d'un véhicule automobile. Cette aile 1 pourrait tout aussi bien être une aile arrière droite de véhicule automobile et ceci est même préféré par les constructeurs en Europe. L'aile 1 porte la trappe à carburant recouverte par son clapet 4 qui s'ouvre donnant accès en son intérieur à un orifice de remplissage de carburant 3 et un orifice de remplissage d'agent liquide de réduction 2, montré en pointillés à la figure 1 car recouvertes par le clapet 4.

Une telle trappe avec clapet 4, au départ non spécifiquement conçue pour contenir un orifice de remplissage d'agent liquide de réduction 2, peut présenter le désavantage de n'être pas munie d'un trou d'évacuation pour l'évacuation dans la trappe d'un trop-plein d'agent liquide de réduction dû à un débordement lors du remplissage, comme le cas échéant d'un trop plein de carburant.

Le trop plein d'agent liquide de réduction s'écoule alors le long de la carrosserie de l'aile 1. Ceci est particulièrement néfaste en ce qui concerne l'agent liquide de réduction car, contrairement au liquide de carburant, cet agent liquide de réduction se cristallise quand il est sec. Il s'ensuit une apparence blanchâtre très sale de l'aile et même une usure de sa peinture.

Le document FR-A-2 435 367 décrit un orifice de remplissage de carburant pour un véhicule automobile comprenant une plaque de base fixée sur une plaque extérieure de carrosserie et formant un espace interne, un tuyau de remplissage communiquant avec un réservoir de carburant et comprenant une extrémité d'alimentation fixée sur la plaque de base, un couvercle fermant l'espace précité.

Cet orifice comprend un récipient, prévu à l'extérieur de et sous ladite extrémité d'alimentation du tuyau de remplissage, et un tuyau d'écoulement ayant une extrémité reliée au récipient et une autre extrémité s'étendant à l'extérieur du véhicule. Il est cependant à considérer que ce document ne concerne pas l'élimination du trop-plein d'agent liquide de réduction mais seulement de carburant.

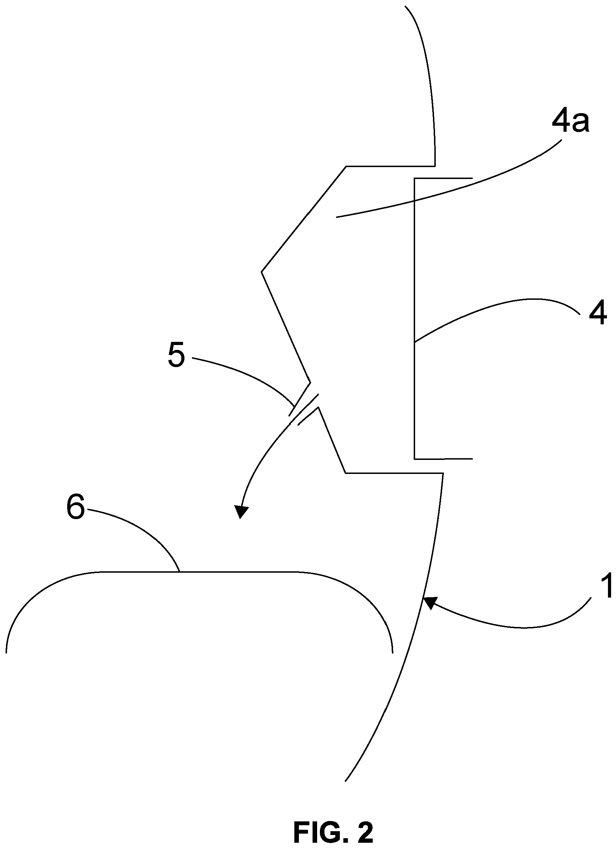

Comme montré à la figure 2, en adaptant un tel dispositif pour évacuer le trop plein d'agent liquide de réduction, le logement 4a de la trappe est muni d'un orifice d'évacuation 5 de trop plein. L'agent liquide de réduction s'évacue alors sur le pare-boue 6 de la roue de l'aile arrière 1. Il peut couler le long du pare-boue 6 ou transversalement sur ce pare-boue 6. Dans les deux cas, des traces de salissure et d'usure de peinture vont alors apparaître.

Pour traiter ce problème, il peut être prévu d'utiliser un tuyau d'évacuation. Un désavantage de cette solution est que la cristalisation de l'agent liquide de réduction va rapidement colmater le tuyau. Un autre désavantage est le prix du tuyau.

Par conséquent, le problème à la base de l'invention est d'éviter par un moyen peu coûteux que le trop plein d'agent liquide de réduction ne salisse et, le cas échéant, n'endommage la carrosserie arrière du véhicule automobile à proximité de son orifice de remplissage.

Pour atteindre cet objectif, il est prévu selon l'invention une aile arrière de véhicule automobile comprenant une trappe de remplissage d'un réservoir d'agent liquide de réduction pour un système de réduction catalytique sélective, cette aile comprenant un pare-boue recouvrant à distance une roue arrière associée, la trappe présentant un logement muni d'un orifice d'évacuation de trop plein d'agent liquide de réduction, le trop plein d'agent liquide s'écoulant de l'orifice d'évacuation vers le pare-boue, caractérisée en ce que le pare-boue comprend une goulotte longitudinale dirigeant le trop plein d'agent liquide vers au moins une extrémité longitudinale du pare-boue.

L'effet technique est d'obtenir une évacuation de l'agent liquide de réduction en trop dans le logement de la trappe qui ne puisse pas salir ni endommager la carrosserie de l'aile arrière. Le trop plein d'agent liquide est guidé par la goulotte vers au moins une extrémité longitudinale du pare-boue, ceci sans demander d'adaptation spécifique dans l'aile arrière autre que la formation d'une goulotte.

Avantageusement, la goulotte est sous la forme de deux nervures longitudinales portées par la face externe du pare-boue, ces deux nervures du pare-boue étant sensiblement parallèles et délimitant entre elles le passage du trop plein d'agent liquide.

Avantageusement, la hauteur des nervures longitudinales portées par la face externe du pare-boue est prédéterminée pour ne pas permettre un débordement par-dessus elles d'une quantité estimée normale d'un trop plein d'agent liquide.

Avantageusement, au moins un trou d'écoulement est disposé vers ladite au moins une extrémité longitudinale du pare-boue.

Avantageusement, un trou d'écoulement est disposé à chaque extrémité longitudinale du pare-boue, la goulotte s'étendant d'une extrémité longitudinale du pare-boue à l'autre extrémité.

Avantageusement, un trou d'écoulement est disposé à une seule extrémité longitudinale du pare-boue, la goulotte présentant un renvoi empêchant l'écoulement du trop plein vers l'autre extrémité longitudinale du pare-boue ne portant pas de trou d'écoulement.

Avantageusement, l'orifice d'évacuation de trop plein est disposé en surplomb d'un point de la portion médiane de la goulotte.

Avantageusement, l'angle d'écoulement maximal du trop plein d'agent liquide par l'orifice d'évacuation est tel que tout le trop plein d'agent liquide quittant l'orifice d'évacuation soit versé dans la goulotte.

Avantageusement, il est prévu une trappe à carburant pour le remplissage d'un réservoir de carburant, la trappe à carburant faisant aussi office de trappe de remplissage d'un réservoir d'agent liquide de réduction, la trappe logeant en son intérieur un orifice de remplissage pour le carburant et un orifice de remplissage pour l'agent liquide de réduction.

L'invention concerne enfin un véhicule automobile, caractérisé en ce qu'il comprend une telle aile arrière.

D'autres caractéristiques, buts et avantages de la présente invention apparaîtront à la lecture de la description détaillée qui va suivre et au regard des dessins annexés donnés à titre d'exemples non limitatifs et sur lesquels :
- la figure 1 est une représentation schématique d'une vue en perspective d'une aile arrière de véhicule automobile comprenant une trappe pour le remplissage de carburant et d'agent liquide de réduction, une telle aile arrière étant connue de l'état de la technique,
- la figure 2 est une représentation schématique d'une vue en coupe transversale de l'aile arrière montrant le logement à l'intérieur de la trappe, ce logement étant muni d'un orifice de trop plein, un tel dispositif étant connu de l'état de la technique,
- la figure 3 est une représentation schématique d'une vue en coupe transversale de l'aile arrière montrant le logement à l'intérieur de la trappe, ce logement étant muni d'un orifice de trop plein et le pare-boue portant des nervures longitudinales, une telle aile arrière étant conforme à un mode de réalisation de la présente invention,
- la figure 4 est une représentation schématique d'une vue en perspective d'un pare-boue portant des nervures longitudinales, un tel pare-boue faisant partie d'une aile arrière conforme à un mode de réalisation de la présente invention.

Il est à garder à l'esprit que les figures sont données à titre d'exemples et ne sont pas limitatives de l'invention. Elles constituent des représentations schématiques de principe destinées à faciliter la compréhension de l'invention et ne sont pas nécessairement à l'échelle des applications pratiques.

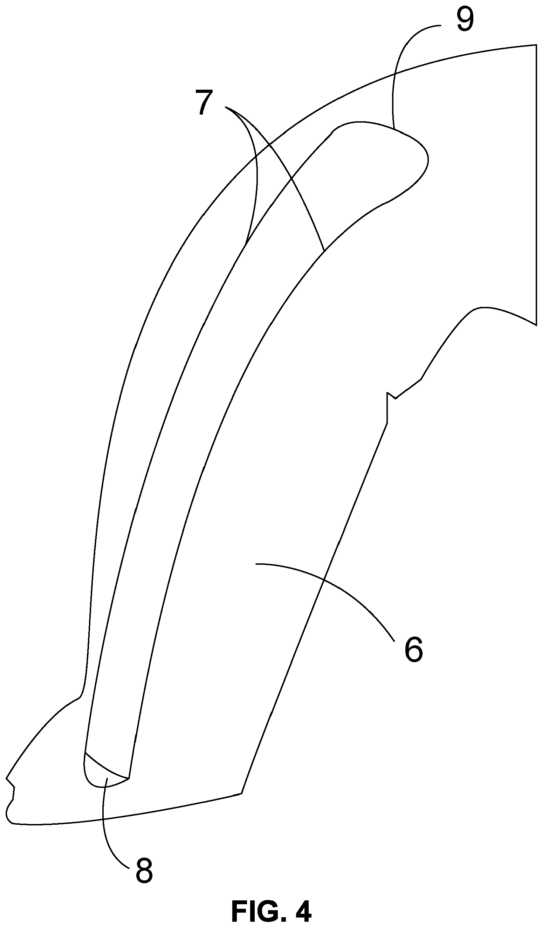

En particulier les dimensions des différents éléments illustrés ne sont pas représentatives de la réalité. Les formes de l'aile arrière gauche ou droite, du pare-boue et de la trappe ne sont notamment pas limitatives. A la figure 4, le pare-boue n'est pas montré dans sa totalité.

Les figures 1 et 2 ont déjà été décrites dans la partie introductive de la présente demande de brevet.

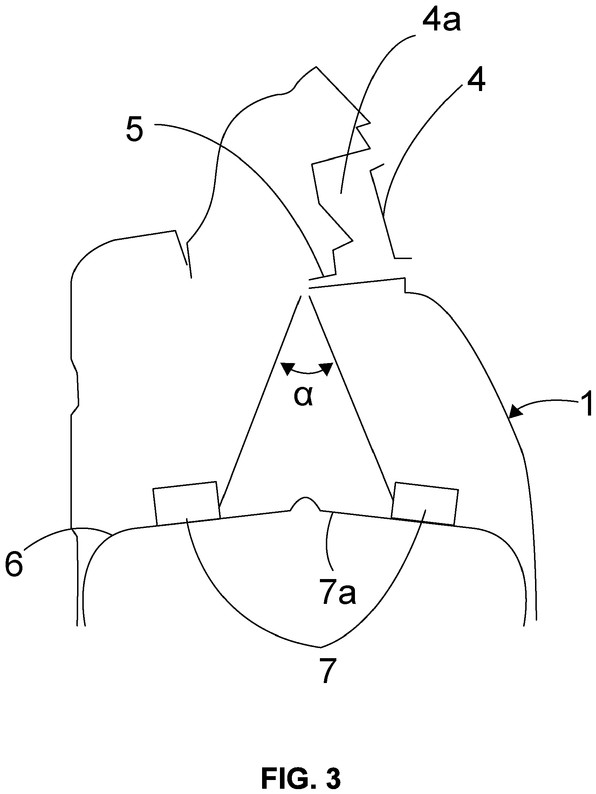

Pour différencier la présente invention de l'état de la technique le plus proche, il va être comparé les figures 2 et 3.

Comme monté à la figure 3, l'invention consiste à créer une forme de goulotte 7a d'évacuation directement sur le pare-boue 6 permettant d'évacuer dans une zone souhaitée le trop plein de l'agent liquide de réduction qui a débordé dans le logement 4a de la trappe 4, 4a.

Conformément à l'invention, celle-ci concerne une aile arrière 1 de véhicule automobile comprenant une trappe 4, 4a de remplissage d'un réservoir d'agent liquide de réduction pour un système de réduction catalytique sélective. Cette aile arrière 1 peut être une aile droite ou gauche.

Cette aile 1 comprend en son intérieur un pare-boue 6 recouvrant à distance une roue arrière associée. La trappe 4, 4a présente un logement 4a pouvant être fermé par un clapet 4, le logement 4a étant muni d'un orifice d'évacuation 5 de trop plein d'agent liquide de réduction, le trop plein d'agent liquide s'écoulant de l'orifice d'évacuation 5 vers le pare-boue 6.

Selon une caractéristique essentielle de l'invention, le pare-boue 6 comprend une goulotte 7a longitudinale dirigeant le trop plein d'agent liquide vers au moins une extrémité longitudinale du pare-boue 6. Cette extrémité longitudinale peut présenter un trou d'écoulement 8, visible à la figure 4, bien que ceci ne soit pas obligatoire.

En se référant aux figures 3 et 4, la goulotte 7a peut revêtir plusieurs formes, par exemple, être une rainure réalisée dans le pare-boue 6 par enlèvement de matière. Il est cependant préféré que la goulotte 7a comprenne deux nervures 7 longitudinales portées par la face externe du pare-boue 6, ces deux nervures 7 du pare-boue 6 étant sensiblement parallèles et délimitant entre elles le passage du trop plein d'agent liquide de réduction.

Les deux nervures 7 issues du pare-boue 6 permettent de canaliser le trop plein d'agent liquide de réduction dans une zone non peinte et non très apparente de l'extérieur du véhicule automobile. De telles nervures 7 peuvent déjà exister sur un pare-boue 6 en tant que nervures de renforcement. Il est donc judicieux d'utiliser de telles nervures ou de les repositionner sur le pare-boue 6 de manière à leur faire délimiter un passage pour le trop plein d'agent liquide de réduction.

Les nervures 7 sont donc proéminentes de la surface du pare-boue 6 en étant portées par la face externe du pare-boue 6. Leur hauteur est prédéterminée pour ne pas permettre un débordement par-dessus elles d'une quantité estimée normale d'un trop plein d'agent liquide. Cette quantité peut être estimée par expérience.

Avantageusement, le pare-boue 6 présente une configuration circulaire suivant à distance le contour de la roue associée, configuration qui n'est pas complètement montrée à la figure 4. Le trop plein d'agent liquide de réduction est préférentiellement versé par l'orifice d'évacuation 5 vers la portion de la face externe du pare-boue 6 la plus haute tandis que ledit au moins un trou d'écoulement 8 porté par au moins une extrémité longitudinale du pare-boue 6 est disposé dans la partie basse du pare-boue 6.

En alternative ou en complément de ces caractéristiques, l'orifice d'évacuation 5 de trop plein peut par exemple être disposé en surplomb d'un point de la portion médiane de la goulotte 7a.

Préférentiellement, au moins un trou d'écoulement 8 est disposé vers une extrémité longitudinale du pare-boue 6. Il est à garder à l'esprit qu'un mode de réalisation sans trou d'écoulement 8 à une ou des extrémités longitudinales du pare-boue 6 est aussi possible.

Dans un mode de réalisation non montré aux figures, un trou d'écoulement 8 est disposé à chaque extrémité longitudinale du pare-boue 6, la goulotte 7a s'étendant d'une extrémité longitudinale du pare-boue 6 à l'autre extrémité.

Dans le mode de réalisation montré aux figures et notamment à la figure 4, le trou d'écoulement 8 est disposé à une seule extrémité longitudinale du pare-boue 6, la goulotte 7a présentant un renvoi 9 empêchant l'écoulement du trop plein vers l'autre extrémité longitudinale du pare-boue 6 ne portant pas de trou d'écoulement 8. Dans le cas d'une goulotte 7a avec des nervures 7, le renvoi 9 est avantageusement formé par une courbure des nervures, les nervures 7 se rejoignant pour former le renvoi 9. A part cette jonction, les deux nervures 7 restent sensiblement parallèles. Un mode de réalisation sans trou d'écoulement 8 mais avec les autres caractéristiques du mode de réalisation précédemment décrit est aussi possible.

Comme il est visible à la figure 3, un angle d'écoulement maximal α du trop plein d'agent liquide par l'orifice d'évacuation 5 est tel que tout le trop plein d'agent liquide quittant l'orifice d'évacuation 5 soit versé dans la goulotte 7a. Ceci permet de ne pas salir le pare-boue 6 à l'extérieur de la goulotte 7a.

Ce qui a été montré à la figure 1 pour le regroupement de l'orifice de remplissage pour le carburant 3 et de l'orifice de remplissage pour l'agent liquide de réduction 2 dans une même trappe 4, 4a est valable pour l'aile arrière 1 conforme à la présente invention. La trappe 4, 4a peut donc loger en son intérieur un orifice de remplissage pour le carburant 3 et un orifice de remplissage pour l'agent liquide de réduction 2.

L'invention concerne enfin un véhicule automobile avec une telle aile arrière 1 qu'elle soit une aile arrière droite ou gauche.

Le principal avantage de la présente invention est de solutionner le problème de salissures et d'usure de la peinture d'éléments de l'aile arrière d'un véhicule automobile portant une telle trappe de remplissage d'agent liquide de réduction.

Un autre avantage de la présente invention est de résoudre le problème technique de colmatage d'un tuyau d'évacuation sortant de la trappe tout en évitant d'utiliser un tel tuyau.

Un autre avantage additionnel peut être obtenu grâce aux nervures qui confèrent de la raideur au pare-boue en plus de la canalisation du trop plein d'agent liquide de réduction.

Encore un autre avantage est l'économie de la solution proposée, étant donné qu'aucun élément nouveau à part la goulotte n'est ajouté dans l'aile arrière et qu'un tuyau d'évacuation n'est pas nécessaire.

L'invention n'est nullement limitée aux modes de réalisation décrits et illustrés qui n'ont été donnés qu'à titre d'exemples.

## Revendications

1. Aile arrière (1) de véhicule automobile comprenant une trappe (4, 4a) de remplissage d'un réservoir d'agent liquide de réduction pour un système de réduction catalytique sélective, cette aile (1) comprenant un pare-boue (6) recouvrant à distance une roue arrière associée, la trappe (4, 4a) présentant un logement (4a) muni d'un orifice d'évacuation (5) de trop plein d'agent liquide de réduction, le trop plein d'agent liquide s'écoulant de l'orifice d'évacuation (5) vers le pare-boue (6), **caractérisée en ce que** le pare-boue (6) comprend une goulotte (7a) longitudinale dirigeant le trop plein d'agent liquide vers au moins une extrémité longitudinale du pare-boue (6).

2. Aile arrière (1) selon la revendication 1, dans laquelle la goulotte (7a) comprend deux nervures (7) longitudinales portées par la face externe du pare-boue (6), ces deux nervures (7) du pare-boue (6) étant sensiblement parallèles et délimitant entre elles le passage du trop plein d'agent liquide.

3. Aile arrière (1) selon la revendication 2, dans laquelle la hauteur des nervures (7) longitudinales portées par la face externe du pare-boue (6) est prédéterminée pour ne pas permettre par-dessus elles un débordement d'une quantité estimée normale d'un trop plein d'agent liquide.

4. Aile arrière (1) selon l'une quelconque des revendications précédentes, dans laquelle au moins un trou d'écoulement (8) est disposé vers ladite au moins une extrémité longitudinale du pare-boue (6).

5. Aile arrière (1) selon la revendication 4, dans laquelle un trou d'écoulement (8) est disposé à chaque extrémité longitudinale du pare-boue (6), la goulotte (7a) s'étendant d'une extrémité longitudinale du pare-boue (6) à l'autre extrémité.

6. Aile arrière (1) selon la revendication 4, dans laquelle, un trou d'écoulement (8) est disposé à une seule extrémité longitudinale du pare-boue (6), la goulotte (7a) présentant un renvoi (9) empêchant l'écoulement du trop plein vers l'autre extrémité longitudinale du pare-boue (6) ne portant pas de trou d'écoulement (8).

7. Aile arrière (1) selon l'une quelconque des revendications précédentes, dans laquelle l'orifice d'évacuation (5) de trop plein est disposé en surplomb d'un point de la portion médiane de la goulotte (7a).

8. Aile arrière (1) selon l'une quelconque des revendications précédentes, dans laquelle l'angle d'écoulement maximal (α) du trop plein d'agent liquide par l'orifice d'évacuation (5) est tel que tout le trop plein d'agent liquide quittant l'orifice d'évacuation (5) soit versé dans la goulotte (7a).

9. Aile arrière (1) selon l'une quelconque des revendications précédentes, dans laquelle il est prévu une trappe (4, 4a) à carburant pour le remplissage d'un réservoir de carburant, la trappe (4, 4a) à carburant faisant aussi office de trappe (4, 4a) de remplissage d'un réservoir d'agent liquide de réduction, la trappe (4, 4a) logeant en son intérieur un orifice de remplissage pour le carburant (3) et un orifice de remplissage pour l'agent liquide de réduction (2).

10. Véhicule automobile, **caractérisé en ce qu'**il comprend une aile arrière (1) selon l'une quelconque des revendications précédentes.

## Patentansprüche

1. Hinterer Kotflügel (1) eines Kraftfahrzeugs, umfassend eine Klappe (4, 4a) zum Einfüllen eines flüssigen Reduktionsmittel-Tanks für ein selektives katalytisches Reduktionssystem, der Kotflügel (1) ein Schutzblech (6) umfassend, das ein dazugehöriges Hinterrad in einem Abstand abdeckt, die Klappe (4, 4a) ein Gehäuse (4a) aufweisend, das mit einer Abflussöffnung (5) des Überlaufs des flüssigen Reduktionsmittels ausgestattet ist, wobei der Überlauf des flüssigen Mittels von der Abflussöffnung (5) zum Schutzblech (6) hin fließt, **dadurch gekennzeichnet, dass** das Schutzblech (6) eine längliche Rinne (7a) umfasst, die den Überlauf des flüssigen Mittels zu mindestens einem Längsende des Schutzblechs (6) hin leitet.

2. Hinterer Kotflügel (1) nach Anspruch 1, wobei die Rinne (7a) zwei längliche Rippen (7) umfasst, die von der Außenseite des Schutzblechs (6) getragen werden, und die zwei Rippen (7) des Schutzblechs (6) im Wesentlichen parallel verlaufen und zwischen sich den Durchgang des Überlaufs des flüssigen Mittels eingrenzen.

3. Hinterer Kotflügel (1) nach Anspruch 2, wobei die Höhe der länglichen Rippen (7), die von der Außenseite des Schutzblechs (6) getragen werden, vorbestimmt ist, um ein Überschwappen über diese einer als gewöhnlich betrachteten Menge eines Überlaufs des flüssigen Mittels nicht zuzulassen.

4. Hinterer Kotflügel (1) nach einem der vorstehenden Ansprüche, wobei mindestens ein Ablaufloch (8) an dem mindestens einen Längsende des Schutzblechs (6) angeordnet ist.

5. Hinterer Kotflügel (1) nach Anspruch 4, wobei ein Ablaufloch (8) an jedem Längsende des Schutzblechs (6) angeordnet ist und die Rinne (7a) sich von einem Längsende des Schutzblechs (6) zum anderen Ende erstreckt.

6. Hinterer Kotflügel (1) nach Anspruch 4, wobei ein Ablaufloch (8) nur an einem Längsende des Schutzblechs (6) angeordnet ist und die Rinne (7a) eine Rückbiegung (9) aufweist, die das Ablaufen des Überlaufs zum anderen Längsende des Schutzblechs (6) hin, das kein Ablaufloch (8) trägt, verhindert.

7. Hinterer Kotflügel (1) nach einem der vorstehenden Ansprüche, wobei die Abflussöffnung (5) des Überlaufs hervorstehend an einer Stelle des Mittelbereichs der Rinne (7a) angeordnet ist.

8. Hinterer Kotflügel (1) nach einem der vorstehenden Ansprüche, wobei der maximale Ablaufwinkel (α) des Überlaufs des flüssigen Mittels durch die Abflussöffnung (5) derart ist, dass der Überlauf des flüssigen Mittels, das aus der Abflussöffnung (5) heraustritt, in die Rinne (7a) geleitet wird.

9. Hinterer Kotflügel (1) nach einem der vorstehenden Ansprüche, wobei eine Klappe (4, 4a) für Kraftstoff zum Einfüllen eines Kraftstofftanks vorgesehen ist, die Klappe (4, 4a) für Kraftstoff ebenfalls als Klappe (4, 4a) zum Einfüllen eines flüssigen Reduktionsmittels-Tanks fungiert, und die Klappe (4, 4a) in ihrem Inneren eine Einfüllöffnung für den Kraftstoff (3) und eine Einfüllöffnung für das flüssige Reduktionsmittel (2) beherbergt.

10. Kraftfahrzeug, **dadurch gekennzeichnet, dass** es einen hinteren Kotflügel (1) nach einem der vorstehenden Ansprüche umfasst.

## Claims

1. Rear wing (1) of a motor vehicle including a flap (4, 4a) for the filling of a tank with a liquid reducing agent for a selective catalytic reduction system, wherein the wing (1) features a mudguard (6) that remotely covers the associated rear wheel, wherein the flap (4, 4a) features a housing (4a) fitted with an outlet (5) for the evacuation of excess liquid reducing agent, whereby the excess liquid reducing agent flows from the outlet (5) towards the mudguard (6), and **characterised in that** the mud-guard (6) features a longitudinal channel (7a) transporting the excess liquid reducing agent towards at least one longitudinal end of the mudguard (6).

2. Rear wing (1) according to claim 1, in which the channel (7a) includes two longitudinal ribs (7) supported by the external surface of the mud-guard (6), wherein the two ribs (7) of the mud-guard (6) are substantially parallel and together delimit a path for the excess liquid reducing agent.

3. Rear wing (1) according to claim 2, in which the height of the longitudinal ribs (7) supported by the external surface of the mudguard (6) is predetermined so that there cannot be an overflow of a quantity deemed normal of excess liquid reducing agent.

4. Rear wing (1) according to any of the previous claims, in which at least a drainage hole (8) is arranged in the vicinity of said at least one longitudinal end of the mudguard (6).

5. Rear wing (1) according to claim 4, in which a drainage hole (8) is arranged at each longitudinal end of the mudguard (6), and wherein the channel (7a) extend from a longitudinal end of the mudguard (6) to the other end.

6. Rear wing (1) according to the claim 4, in which a drainage hole (8) is arranged at only one longitudinal end of the mudguard (6), and wherein the channel (7a) features a return means (9) preventing the excess liquid reducing agent to flow to the other longitudinal end of the mud-guard (6) that does not include a drainage hole (8).

7. Rear wing (1) according to any of the previous claims, in which the drainage hole (5) for the excess liquid reducing agent is configured to be overhanging on a point of the median section of the channel (7a).

8. Rear wing (1) according to any of the previous claims, in which the maximum flow angle (a) of the excess liquid reducing agent through the drainage hole (5) is such that any excess liquid reducing agent flowing through the drainage hole (5) is poured into the channel (7a).

9. Rear wing (1) according to any of the previous claims, **characterised in that** it includes a fuel flap (4, 4a) for the filling of a fuel tank, wherein the fuel flap (4, 4a) also serves as a flap (4, 4a) for the filling of a liquid reducing agent tank, and wherein the flap (4, 4a) houses a filler hole for the fuel (3) and a filler hole for the liquid reducing agent (2).

10. Motor vehicle, **characterised in that** includes a rear wing (1) according to any of the previous claims.
